Europäisches Patentamt

European Patent Office

Office européen des brevets

(11) Veröffentlichungsnummer: **0 084 073**
**B1**

(12) **EUROPÄISCHE PATENTSCHRIFT**

(45) Veröffentlichungstag der Patentschrift:
24.09.86

(21) Anmeldenummer: **82100329.0**

(22) Anmeldetag: **19.01.82**

(51) Int. Cl.⁴: **B 60 Q 1/04**

(54) Halterahmen für eine Leuchte und Verbindungselement.

(43) Veröffentlichungstag der Anmeldung:
27.07.83 Patentblatt 83/30

(45) Bekanntmachung des Hinweises auf die Patenterteilung:
24.09.86 Patentblatt 86/39

(84) Benannte Vertragsstaaten:
AT DE FR GB IT SE

(56) Entgegenhaltungen:
FR-A-1 252 093
FR-A-2 341 406
GB-A-2 005 818
GB-A-2 053 990

(73) Patentinhaber: **DEERE & COMPANY, 1 John Deere Road, Moline Illinois 61265 (US)**

(72) Erfinder: **Bauer, Lothar, Rheinauer Ring 70, D-6800 Mannheim (DE)**
Erfinder: **Becker, Siegfried, D.- Bonhoefferstrasse 3, D-6800 Mannheim (DE)**
Erfinder: **Effenberger, Hans, Schwetzinger Platz, D-6800 Mannheim (DE)**
Erfinder: **Gradmann, Gerhard, Eichenstrasse 2, D-6834 Ketsch (DE)**
Erfinder: **Keller, Manfred, Jahnstrasse 15, D-6901 Dossenheim (DE)**
Erfinder: **Schäfer, Ulrich, Rappenhof, D-7250 Leonberg (DE)**

(74) Vertreter: **Feldmann, Bernhard, DEERE & COMPANY European Office, Patent Department Steubenstrasse 36- 42 Postfach 503, D-6800 Mannheim 1 (DE)**

LIBER, STOCKHOLM 1986

## Beschreibung

Die Erfindung betrifft einen Halterahmen für eine Leuchte, insbesondere für einen einstellbaren Scheinwerfer für Kraftfahrzeuge mit Streuscheibe und Reflektor, der an dem Halterahmen mit mindestens einem Verbindungselement lösbar befestigbar ist. Ferner betrifft die Erfindung einen entsprechenden Scheinwerfer sowie ein Verbindungselement aus einem elastischen, schwingungsdämpfenden Material zur lösbaren Verbindung zweier Teile.

Aus der DE-P 938 841 ist ein Halterahmen einschließlich Scheinwerfer der obengenannten Art bekannt. Er besitzt einen einstellbaren Hohlspiegel bzw. Reflektor, der durch mindestens einen aus gummiartigem Werkstoff bestehenden Gelenkzapfen an seinem Träger (schwenkbar) befestigt ist. Dieser bekannte Scheinwerfer weist weiterhin einen Trag- oder Deckelring auf, der mit einer kappenförmigen lichtdurchlässigen Abdeckscheibe und einem ringförmigen Mantel durch bügelartige Spannfedern zu einer Einbaueinheit verbunden ist. Im Mantelring ist ein Reflektor mittels eines Gelenkzapfens schwenkbar gelagert. Oben am Deckelring befindet sich eine Durchbrechung, in die eine Einstellschraube eingeführt ist. Der Gewindeschaft dieser Schraube ist in einen zweiten, verschiebbar gefürten Gelenkzapfen eingeschraubt, der ebenso wie der erste Zapfen aus gummiartigem Werkstoff besteht. Durch Drehen der Schraube kann die Reflektorneigung gegen die Fahrbahn eingestellt werden. Der Nachteil dieser bekannten Anordnung besteht darin, daß die Befestigung des Deckelringes über mehrere Zwischenteile erfolgt, wodurch der Einbau des Scheinwerfers zeitaufwendig ist.

Ferner ist aus der DE-A- 1 098 468 ein Scheinwerfer, insbesondere für Kraftfahrzeuge, bekannt, bei dem die elastischen Halterungen derart ausgebildet sind, daß die Stützelemente zum Festhalten des optischen Systems an der Fassung in die elastischen Halterungen einklinken können. Der Nachteil dieser bekannten Anordnung besteht darin, daß die Nut der elastischen Halterungen verschließanfällig ist. Ferner benötigt man bei diesem bekannten Scheinwerfer zusätzlich noch einen Abdeckring, so daß beim Auswechseln des Scheinwerfers mehrere Elemente gelöst und wieder befestigt werden müssen, wodurch der Einbau des Scheinwerfers zeitaufwendig ist.

Die der vorliegenden Erfindung zugrundeliegende Aufgabe besteht darin, einen Halterahmen für Leuchten der eingangs genannten Art vorzuschlagen, der einerseits eine schüttelfeste Lagerung und andererseits eine einfache und verstellbare Befestigung der Leuchten, insbesondere an Kraftfahrzeugen, ermöglicht.

Diese Aufgabe wird erfindungsgemäß dadurch gelöst, daß das Verbindungselement als Zapfen ausgebildet und an der Rückseite des Halterahmens angeformt ist, wobei der Halterahmen und der Zapfen aus elastischem, schwingungsdämffendem Material, insbesondere Kunststoff, bestehen.

Der erfindungsgemäße Halterahmen wird mittels des an seiner Rückseite angeformten Zapfens mit bekannten Leuchten verbunden. Hierbei wird der Zapfen durch eine Bohrung hindurchgeführt und unter Zugeinwirkung befestigt. Da der Zapfen aus dem elastischen Material besteht, verkleinert sich sein Querschnitt unter Zugeinwirkung. Nach der Zugentlastung sitzt der Zapfen unter Wulstbildung in der Aussparung, durch die er geführt wurde, fest. Auf diese Weise ist eine einfache Montage des Halterahmens an der Leuchte gewährleistet. Da der gesamte Halterahmen aus dem elastischen, schwingungsdämpfenden Material besteht, ist die schüttelfeste Lagerung, insbesondere eines Scheinwerfers, gewährleistet. Zwischen dem Reflektor des Scheinwerfers und dem Kraftfahrzeug besteht keine feste Verbindung, so daß Erschütterungen des Kraftfahrzeugs nicht auf den Reflektor des Scheinwerfers übertragen werden. Ferner ist es möglich, die mittels des zapfenartigen Verbindungselementes hergestellte Befestigung des Halterahmens durch einfache Zugeinwirkung an dem Zapfen wieder zu lösen.

Der Vorteil dieses erfindungsgemäßen Halterahmens liegt in der kostengünstigen, einfach zu montierenden Teileverbindung, die bei Bedarf gleichzeitig schwingungsdämpfende bzw. frequenzändernde Vorteile bringt. Die durch Schwingungen verursachten Glühlampen-Ausfälle bei Frontscheinwerfern von Kraftfahrzeugen werden mit dem erfindungsgemäßen Halterahmen vermieden. Es ist eine optimale Einpassung der Leuchte an der Karosserie eines Kraftfahrzeuges gegeben, ohne daß eine zusätzliche Abdeckung notwendig ist.

Vorzugsweise verjüngt sich der Zapfen in seiner Längsrichtung stetig. Gemäß dieser besonders bevorzugten Ausführungsform ist durch die Verjüngung des Querschnitts des Zapfens über die ganze Länge oder einen Teil davon zum Ende hin gewährleistet, daß eine einfache Auffädelung des Zapfens auf das Gegenstück möglich ist.

Zapfenförmige, vorzugsweise schraubenähnlich geformte Verbindungselemente aus elastischen Kunststoff sind in der GB-A-20 58 990 vorbeschrieben. Eine Anformung an eines der zu verbindenden Teile ist dort nicht vorgesehen und ein spezifisches Anwendungsgebiet nicht genannt.

Gemäß einer weiteren besonders bevorzugten Ausführungsform ist an der Rückseite des Halterahmens ein umlaufender Vorsprung angeformt. Gemäß dieser besonders bevorzugten Ausführungsform ist eine formschlüssige Verbindung des Halterahmens an dem Kraftfahrzeug möglich. Der Vorsprung ragt über die Rückseite des Halterahmens hinaus. Bei der Befestigung des Halterahmens an dem Kraftfahrzeug klemmt der Halterahmen mittels des umlaufenden Vorsprunges an der entsprechenden Aussparung des Kraftfahrzeugs fest, so daß bei der Montage eine einfache formschlüssige Verbindung entsteht. Diese Verbindung kann zusätzlich zu Befestigungsschrauben angewandt werden. Es ist jedoch auch möglich, auf Befestigungsschrauben zu verzichten.

Vorzugsweise weist der Halterahmen Bohrungen auf, in denen Stahlbüchsen angeordnet sind. Durch die Stahlbüchsen werden Schrauben geführt, die z. B. zur Einstellung des Reflektors oder zur Befestigung des Halterahmens dienen. ·

Der erfindungsgemäße Halterahmen besteht aus einem elastischen Material und der aus dem gleichen Werkstoff bestehende Zapfen dient z. B. als Festpunkt für die Reflektoreinstellung. Zwei Einstellschrauben ermöglichen die Reflektoreinstellung in zwei Richrungen um diesen Punkt.

Die Erfindung betrifft ferner einen einstellbaren Scheinwerfer, insbesondere für Kraftfahrzeuge, der mit mindestens einem Verbindungselement lösbar an einem Halterahmen befestigt ist. Erfindungsgemäß ist das Verbindungselement wiederum als Zapfen ausgebildet und an der Rückseite des Halterahmens angeformt, wobei der Halterahmen und der Zapfen aus elastischem, schwingungsdämpfendem Material bestehen. Ferner sind an dem Scheinwerfer bzw. Reflektor nach außen weisende Laschen mit Bohrungen angeordnet, wobei durch eine Bohrung der Zapfen des Halterahmens ragt und Schrauben zur Einstellung des Reflektors durch Bohrungen des Halterahmens und Bohrungen·der Laschen geführt sind. Dieser erfindungsgemäße Scheinwerfer kann an irgendeinem Kraftfahrzeug eingebaut werden. Aufgrund des Halterahmens weist er eine optimale Einpassung an die Fahrzeugkarosserie auf.

Der Scheinwerfer weist einen einstellbaren Hohlspiegel bzw. Reflektor und eine Streuscheibe auf. Üblicherweise besteht der Reflektor aus verspiegeltem Blech oder Kunststoff und die Streuscheibe aus Glas oder lichtdurchlässigem Kunststoff. Der Reflektor und die Streuscheibe sind insbesondere in Kraftfahrzeugen sprühwasserdicht zu einer Einheit verklebt.

Die Erfindung wird nun anhand der beiliegenden Zeichnungen näher erläutert. Es zeigen:

Figur 1 eine Draufsicht auf einen erfindungsgemäßen Halterahmen,

Figur 2 den Schnitt längs der Linie A-A gemäß Figur 1,

Figur 3 eine Ansicht der Rückseite des erfindungsgemäßen Halterahmens,

Figur 4 den Schnitt längs der Linie B-B gemäß Figur 3,

Figur 5 eine Draufsicht auf den an einem Scheinwerfer befestigten Halterahmen,

Figur 6 einen Schnitt längs der Linie C-C gemäß Figur 5,

Figur 7 einen Schnitt durch einen Teil des Halterahmens und des Scheinwerfers,

Figur 8, 9 und 10 einen Ausschnitt der verbundenen Teile während des Befestigungsvorganges.

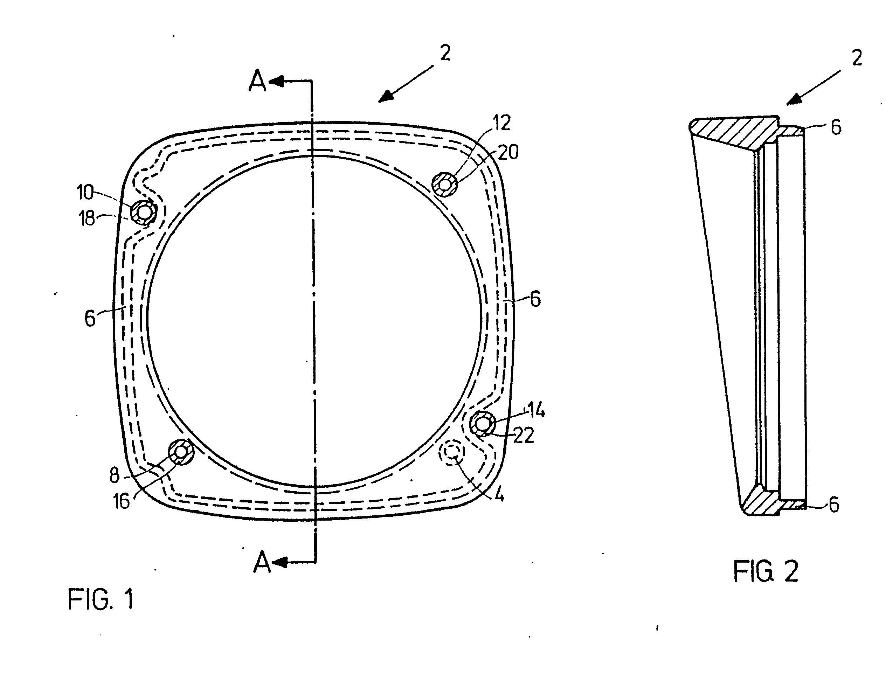

Gemäß Figur 1, 2, 3 und 4 ist an der Rückseite 3 des Halterahmens 2 ein Verbindungselement als Zapfen 4 angeformt. Der Halterahmen 2 und der Zapfen 4 bestehen aus elastischem, schwingungsdämpfendem Material.

Der Halterahmen 2 weist vier Bohrungen 8, 10, 12 und 14 auf, in denen Stahlbüchsen 16, 18, 20 und 22 angeordnet sind. An der Rückseite 3 des Halterahmens 2 ist·der umlaufende Vorsprung 6 angeformt. Der äußere Rand dieses Vorsprunges 6 entspricht der entsprechenden Aussparung in einem Kraftfahrzeug. Wird der Halterahmen in die entsprechende Aussparung eingeführt, so sitzt er mittels dieses Vorsprunges 6 formschlüssig fest. Es ist jedoch auch möglich, zusätzlich den Halterahmen 2 auf an sich bekannte Weise mittels durch die Bohrungen 10 und 14 geführten Befestigungsschrauben an dem Kraftfahrzeug zu befestigen. Entsprechend werden durch die Bohrungen 8 und 12 Schrauben geführt, die zur Einstellung des Reflektors dienen, der mit dem erfindungsgemäßen Halterahmen 2 lösbar verbunden ist.

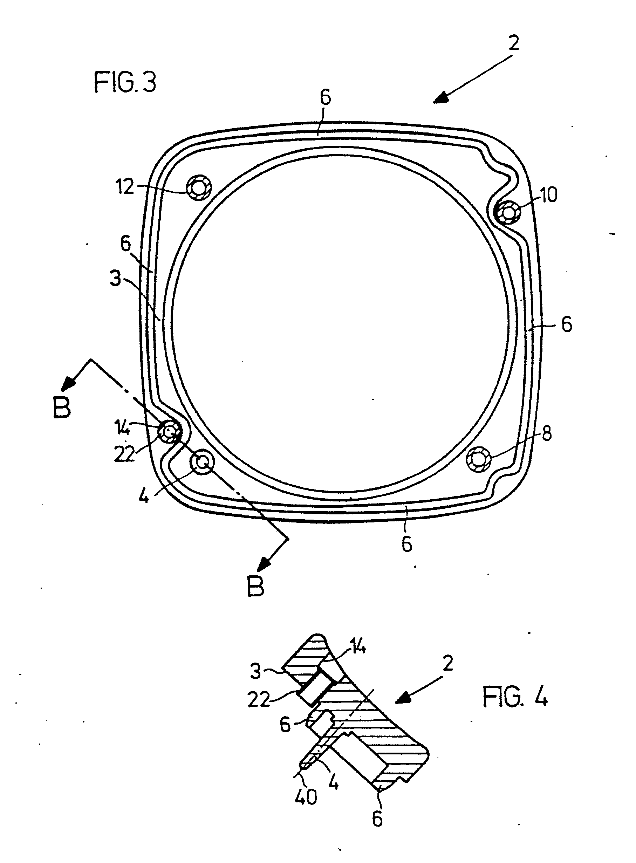

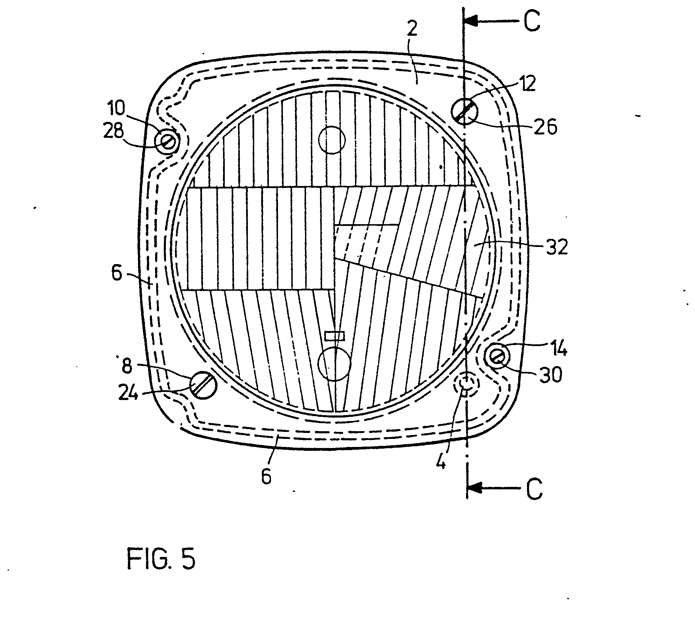

Gemäß Figur 4, die den Schnitt längs der Linie B-B gemäß Figur 3 darstellt, weist der Halterahmen 2 an seiner Rückseite 3 den Zapfen 4 auf. Dieser Zapfen 4 ragt über den Vorsprung 6 hinaus. Die Längsachse 40 des Zapfens 4 verläuft senkrecht zur Ebene des Halterahmens 2.

Gemäß Figur 5 ist der erfindungsgemäße Halterahmen 2 mit dem Scheinwerfer 32 lösbar verbunden. Durch die Bohrung 10 bzw. 14 ist die Befestigungsschraube 28 bzw. 30 geführt, mit denen der Halterahmen 2 befestigt ist. Ebenso ist durch die Bohrung 8 bzw. 12 die Reflektoreinstellschraube 24 bzw. 26 geführt. Zwischen den jeweiligen Bohrungen und den entsprechenden Schrauben befinden sich die in den vorhergehenden Zeichnungen dargestellten Stahlbüchsen. Gestrichelt ist der umlaufende Vorsprung 6 an der Rückseite des Halterahmens 2 erkennbar.

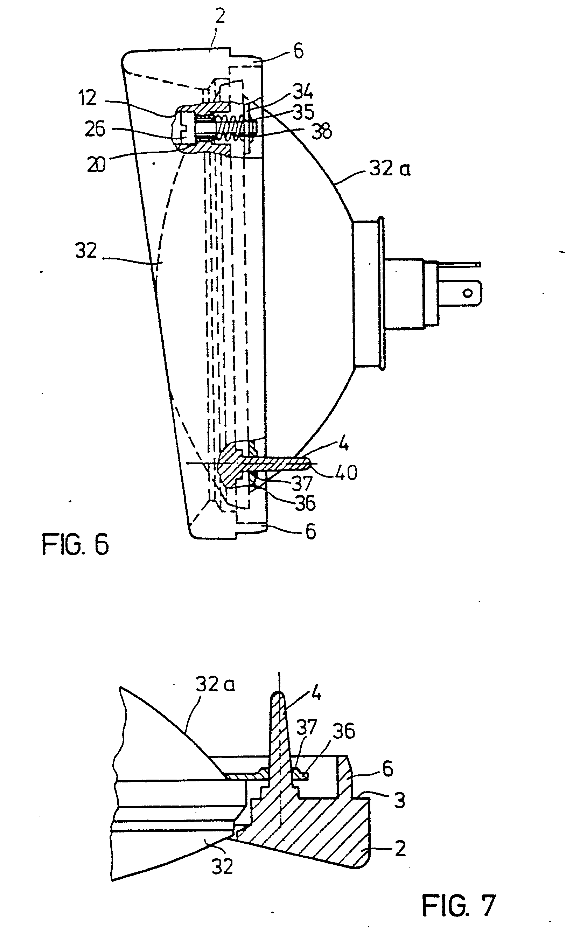

Figur 6 zeigt den Schnitt längs der Linie C-C gemäß Figur 5, wobei die Bereiche der Reflektoreinstellschraube 26 bzw. des Zapfens 4 aufgebrochen dargestellt sind. Der Zapfen 4 ist durch die an dem Reflektor 32 a angebrachte Lasche 36 geführt. Diese Lasche 36 weist die Bohrung 37 auf. Der Zapfen 4 ragt durch diese Bohrung 37 der Lasche 36 hindurch. Durch Zugeinwirkung verjüngt sich der Querschnitt des Zapfens 4, so daß nach Zugentlastung der Halterahmen 2 mit dem Reflektor 32 a lösbar verbunden ist.

Die Reflektoreinstellschraube 26 ist durch die in der Bohrung 12 angeordnete Stahlbüchse 20 geführt. Die Reflektoreinstellschraube 26 ragt durch die Bohrung 35 der Lasche 34 des Reflektors 32 a hindurch, wobei zwischen der Lasche 34 und der Stahlbüchse 20 die Feder 38 angeordnet ist. Auf diese Weise ist eine einfache Reflektoreinstellung durch Verdrehen der Reflektoreinstellschraube 26 möglich. Die Reflektoreinstellschraube 24 ist analog angeordnet.

Der Scheinwerfer 32 weist den Reflektor 32 a auf. Dieser Reflektor 32 a ist mit einer Streuscheibe sprühwasserdicht zu einer Einheit verklebt. Üblicherweise besteht der Reflektor aus verspiegeltem Blech oder Kunststoff und die Streuscheibe aus Glas oder lichtdurchlässigem Kunststoff.

Gemäß Figur 7 weist der Halterahmen 2 an seiner Rückseite 3 den kreisförmigen, konisch geformten Zapfen 4 und den umlaufenden Vorsprung 6 auf. Der Zapfen 4 ragt durch die Bohrung 37 der Lasche 36 hindurch. Diese Lasche 36 ist an dem Reflektor 32 a des Scheinwerfers 32 angeordnet.

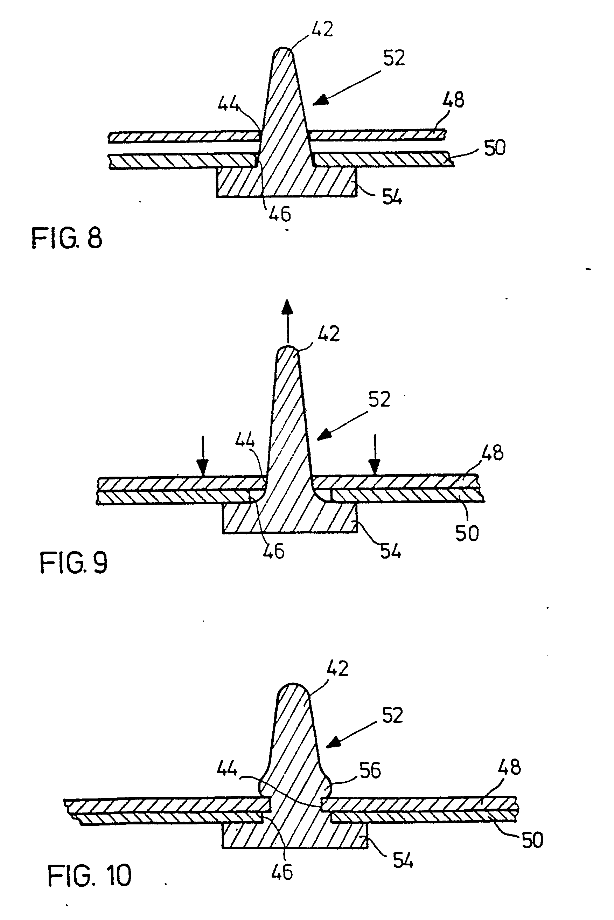

Die Figuren 8, 9 und 10 veranschaulichen die Funktionsweise des Zapfens 42. Gemäß Figur 8 wird der Zapfen 42 in die Bohrungen 44 und 46 so weit aufgefädelt, bis sein Querschnitt dem Querschnitt der Bohrung 46 entspricht. Anschließend verringert er gemäß Figur 9 unter Zugeinwirkung seinen Querschnitt und wird bis in die gewünschte Stellung gezogen. Vorteilhafterweise werden die zu verbindenden Teile 48 und 50 während dieser Zugeinwirkung auf den Zapfen 42 festgehalten. Anschließend sitzt der Zapfen 42 gemäß Figur 10 unter Zugentlastung in den Bohrungen 44 und 46 fest. Hierbei bildet sich oberhalb des Teiles 48 der Wulst 56. Zieht man nochmals an dem Zapfen 42, so verringert sich sein Querschnitt, der Wulst 56 verschwindet und der Zapfen 42 kann auf einfache Weise aus den Bohrungen 44 und 46, deren Querschnitt größer ist als der Querschnitt des Zapfens 42, unter Zugeinwirkung entfernt werden.

Bei entsprechender Geometrie der Bohrungen und des Zapfens ist es selbstverständlich auch möglich, die zu verbindenden Teile in einem gewünschten Abstand voneinander zu halten.

Als Material für den Halterahmen bzw. das Verbindungselement empfiehlt sich Polyurethan, das beständig gegen Öl und UV-Strahlen ist. Dieses Material besitzt eine Härte von etwa 80 Shore. Beispielsweise wurde ein Zapfen an einem Halterahmen angeformt, dessen Durchmesser am Fuß des Zapfens 4 mm betrug und sich bis zu einem Durchmesser von 3 mm an der Spitze des Zapfens verringerte. Die Gesamtlänge des Zapfens vom Fuß bis zur Spitze betrug bei dieser Ausgestaltung 22 mm.

**Patentansprüche**

1. Halterahmen für eine Leuchte, insbesondere für einen einstellbaren Scheinwerfer (32) für Kraftfahrzeuge mit Streuscheibe und Reflektor (32a), der an dem Ralterahmen (2) mit mindestens einem Verbindungselement (vgl 4) lösbar befestigbar ist, dadurch gekennzeichnet, daß das Verbindungselement als Zapfen (4) ausgebildet und an der Rückseite (3) des Halterahmens (2) angeformt ist, wobei der Halterahmen (2) und der Zapfen (4) aus elastischem, schwingungsdämpfendem Material, insbesondere Kunststoff, bestehen.

2. Halterahmen nach Anspruch 1, dadurch gekennzeichnet, daß sich der Zapfen (4) in seiner Längsrichtung (Längsachse 40) stetig verjüngt.

3. Halterahmen nach Anspruch 1 oder 2, dadurch gekennzeichnet, daß der Zapfen (4) im Querschnitt kreisförmig ist.

4. Halterahmen nach Anspruch 1, 2 oder 3, dadurch gekennzeichnet, daß die Längsachse (40) des Zapfens (4) etwa senkrecht zur Ebene des Halterahmens (2) verläuft.

5. Halterahmen nach mindestens einem der vorherigen Ansprüche, dadurch gekennzeichnet, daß an der Rückseite (3) des Halterahmens (2) ein umlaufender Vorsprung (6) angeformt ist.

6. Halterahmen nach mindestens einem der vorherigen Ansprüche, dadurch gekennzeichnet, daß der Halterahmen (2) Bohrungen (8, 10, 12, 14) aufweist, in denen Stahlbüchsen (16, 18, 20, 22) angeordnet sind.

7. Einstellbarer Scheinwerfer mit einem Halterahmen nach einem der vorherigen Ansprüche, dadurch gekennzeichenet, daß an dem·Scheinwerfer (32) bzw. Reflektor (32 a) nach außen weisende Laschen (34, 36) mit Bohrungen (35, 37) angeordnet sind, wobei durch eine Bohrung (37) der Zapfen (4) des Halterahmens (2) ragt und Schrauben (24, 26) zur Einstellung des Reflektors (32 a) durch Bohrungen (8, 12) des Halterahmens (2) und Bohrungen (35) der Laschen (34) geführt sind.

**Claims**

1. Mounting frame for a lamp, in particular an adjustable headlamp (32) for motor vehicles having a diffusing lens and a reflector (32a), which can be fixed detachably to the mounting frame (2) by means of at least one fastening element (cf 4), characterised in that the fastening element is in the form of a peg (4) and is formed at the back (3) of the mounting frame (2), the mounting frame (2) and the peg (4) consisting of elastic, vibration-damping material, in particular plastic.

2. Mounting frame according to claim 1, characterised in that the peg (4) tapers constantly in the direction of its length (longitudinal axis 40).

3. Mounting frame according to claim 1 or 2, characterised in that the peg (4) is circular in cross-section.

4. Mounting frame according to claim 1, 2 or 3, characterised in that the longitudinal axis (40) of the peg (4) extends substantially perpendicularly to the plane of the mounting frame (2).

5. Mounting frame according to at least one of the preceding claims, characterised in that an encircling projection (6) is formed at the back (3) of the mounting frame (2).

6. Mounting frame according to at least one of the preceding claims, characterised in that the mounting frame (2) has bores (8, 10, 12, 14) in which steel bushes (16, 18, 20, 22) are arranged.

7. Adjustable headlamp with a mounting frame according to any one of the preceding claims, characterised in that outwardly directed lugs (34, 36) with holes (35, 37) are arranged on the headlamp (32) or reflector (32a), the peg (4) of the mounting frame (2) projecting through one hole (37) and screws (24, 26) for adjusting the reflector (32a) being passed through bores (8, 12) in the mounting frame (2) and holes (35) in the lugs (34).

## Revendications

1.- Cadre de support pour projecteur, en particulier pour phare réglable (32) de véhicules automobilescomportant un verre formant diffuseur et un réflecteur (32a) pouvant être fixé amoviblement sur le cadre de support (2) par au moins un élément d'assemblage (4), caractérisé en ce que l'élément d'assemblage est constitué par un téton (4) et est ménagé par formage sur la face arrière (3) du cadre de support (2), ce cadre de support (2) et le téton (4) étant en une matière élastique amortissant les vibrations, en particulier en matière plastique.

2.- Cadre de support suivant la revendication 1, caractérisé en ce que le téton (4) va en s'amincissant constamment dans sa direction longitudinale (axe longitudinal 40).

3.- Cadre de support suivant la revendication 1 ou 2, caractérisé en ce que le téton (4) a en section droite une forme circulaire.

4.- Cadre de support suivant la revendication 1, 2 ou 3, caractérisé en ce que l'axe longitudinal (40) du téton (4) s'étend en principe perpendiculairement au plan du cadre de support (2).

5.- Cadre de support suivant l'une au moins des revendications précédentes, caractérisé en ce qu'une protubérance périphérique (6) est ménagée par formage sur la face arrière (3) du cadre de support (2).

6.- Cadre de support suivant l'une au moins des revendications précédentes, caractérisé en ce que le cadre de support (2) présente des perçages (8, 10, 12, 14) dans lesquels des douilles en acier (16, 18, 20, 22) sont logées.

7.- Phare réglable avec cadre de support suivant l'une des revendications précédentes, caractérisé en ce qu'il est prévu, sur le phare (32) ou sur le réflecteur (32a), des pattes (34, 36) dirigées vers l'extérieur et munies de perçages (35, 37), le téton (4) du cadre de support (2) faisant saillie à travers un perçage (37), des vis (24, 26) servant au réglage du réflecteur (32a) étant guidées à travers des perçages (8, 12) du cadre de support (2) et des perçages (35) des pattes (34).

A

2

12
20
10
18

6

6

14
22

8
16

4

A

FIG. 1

2

6

6

FIG 2

0 084 073

FIG. 3

FIG. 4

FIG. 5

FIG. 6

FIG. 7

FIG. 8

FIG. 9

FIG. 10